Europäisches Patentamt

European Patent Office

Office européen des brevets

(19)

(11) Publication number: **0 365 156**
**A2**

# (12) EUROPEAN PATENT APPLICATION

(21) Application number: **89309761.8**

(22) Date of filing: **26.09.89**

(51) Int. Cl.5: **F16L 55/165**

(30) Priority: **27.09.88 US 249896**
**25.10.88 US 262469**

(43) Date of publication of application:
**25.04.90 Bulletin 90/17**

(84) Designated Contracting States:
**DE ES FR GB IT SE**

(71) Applicant: **INSTA-PIPE RESEARCH LIMITED**
**PARTNERSHIP**
**30100 Van Dyke Avenue**
**Warren Michigan 48093(US)**

(72) Inventor: **Lyon, Lyman Richard**
**1200 Orchard Ridge Road**
**Bloomfield Hills Michigan 48013(US)**

(74) Representative: **Williams, Trevor John et al**
**J.A. KEMP & CO. 14 South Square Gray's Inn**
**London WC1R 5EU(GB)**

(54) **Pipe liner and method of installation thereof.**

(57) A liner for a pipe (14) comprising; an imperforate inner tube (12), a first fiber matrix (16) surrounding said tube, a layer (18) of resin impregnated open cell foam surrounding said first fibre matrix, and a second fibre matrix (20) surrounding said layer of open cell foam, radial compression of said foam effecting flow of said resin through said first and second fibre matrices into bonding contact with said tube and pipe, respectively.

## PIPE LINER AND METHOD OF INSTALLATION THEREOF

The invention relates to the rehabilitation of deteriorated underground piping.

It is known to replace damaged pipe sections by slip lining, i.e., the insertion of a second pipe of smaller diameter through an existing pipe. However, this technique requires a certain amount of excavation which is costly, time consuming, and particularly impractical in congested urban areas. Moreover the smaller pipe employed in slip lining appreciably reduces pipeline capacity.

It is also known to line pipe insitu by inserting a pliable sleeve into the pipe. An inner surface of the sleeve is impregnated with a thermoset resin. The sleeve is inverted as it is advance through the damaged pipe under hydrostatic pressure. The sleeve is thus turned inside-out, with its resin-impregnated surface facing the inner walls of the damaged pipe. Water within the liner is then heated and recirculated for several hours, whereby the thermoset resin cures to form a new pipe within the original pipe.

However, neither the aforesaid slip lining nor the inverted thermoset resin sleeve method results in bonding of the sleeve to the pipe.

## SUMMARY OF THE INVENTION

The pipe liner of the instant invention comprises an elastomeric tube having an outside diameter slightly smaller than the inside diameter of the damaged pipe. The tube is encompassed by a pair of fibre lattices that are radially spaced from one another by a layer of open cell foam. Resin is induced into the foam just prior to insertion of the liner into the pipe. Thereafter, the elastomeric tube, resin impregnated foam, and fibre lattices are biased radially outwardly compressing the foam and forcing the resin therein radially inwardly through the inner fibre lattice and radially outwardly through the radially outer fibre lattice into bonding contact with the elastomeric tube and inner wall of the damaged pipe, respectively.

## BRIEF DESCRIPTION OF THE DRAWINGS

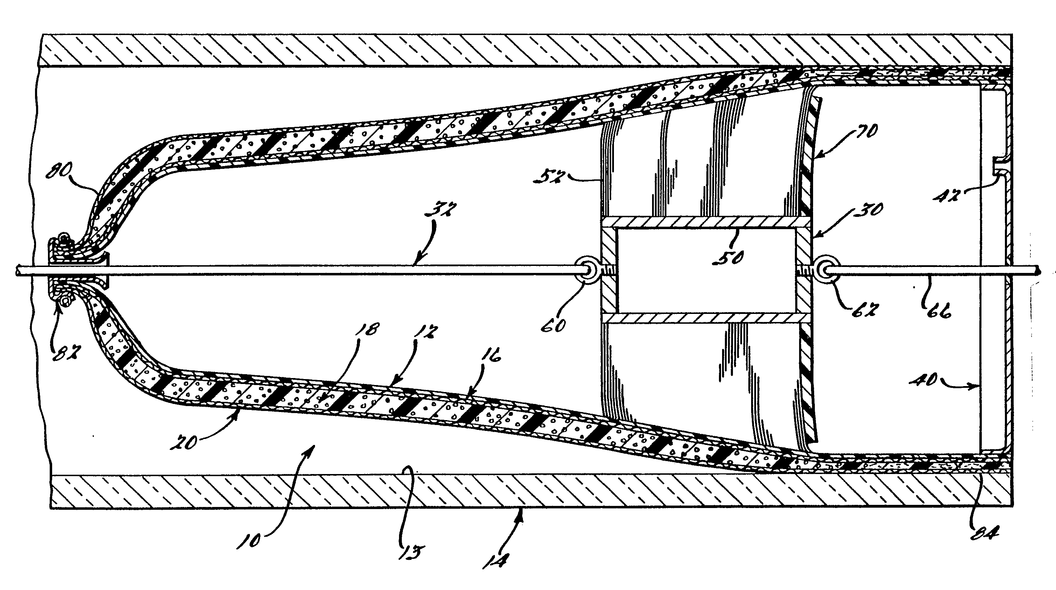

Figure 1 is a cross sectional view of damaged pipe in the process of being lined by the process and with the pipe liner of the instant invention;

## DETAILED DESCRIPTION OF THE PREFERRED EMBODIMENT OF THE INVENTION

Referring to the drawing, a pipe liner 10 constructed in accordance with the instant invention comprises a relatively thin imperforate elastomeric inner tube 12, for example, polyeurethane tubing, having a diameter slightly smaller than the nominal diameter 13 of a section of a pipe 14 to be rehabilitated. A radially inner reinforcement fibre lattice 16, for example fibre glass cloth, encompasses the elastomeric tube 12 and is formed so as to be slightly radially expandable. A foam layer 18 of, for example, open cell polyeurethane foam, is disposed radially outwardly of the fibre lattice 16 so as to function as a reservoir for an epoxy resin. An outer fibre lattice 20 of, for example, fibre glass cloth, is disposed about the foam layer 18.

More specifically, suitable resin formulations may be composed of unmodified epoxy resin (equivalent weight 190-DER-331 or equivalent) or modified epoxy resin (82% DER-331 with 18% azepoxy 8 diluent) both supplied by Dow Chemical. Equivalent products from Shell, RCI, and CIBA are available.

DER-324 containing a diluent may be used as a viscosity reducer for the epoxy mix. Azepoxy 8 obtained from Sherex Chemical may be used with DER-331.

Accelerators include polyamides from Sherex Chemical designated Azamide 325 and 340, Amido-Amines from Sherex designated 300 and 360, modified Aliphatic Amine 1510 from Pacific-Anchor, and a Mannich base from Sherex designated Azamine 240. DMD-30 (Rohm & Haas) and Nonyl Phenol can also be used as accelerators.

Due to its ability to bond well to wet surfaces, Azamine 240 is preferably used as a curing agent. For example, an Azamine 240/LOC-I-8 System can be accelerated with DMP-30. The adhesion properties of this Azamine 240 system permits the use of water to float the saturated pipe liner 10 into position in the pipe 14 during installation.

The amount of resin used for an 8 inch pipe is approximately one pound per foot. The amount of DMP-30 accelerator used is varied depending on the temperature and the estimated time required for installation. For example, a constructed embodiment of the invention utilized the following resin system;

| TRADE NAME AND FUNCTION | TECHNICAL NAME AND/OR DESCRIPTION | USE LEVELS |
|---|---|---|
| 1) EPOXY RESIN (Equivalent Products Used) Shell Epon 828 CIBA Adaldite 6010 DOW DER-331 | Digiycidyl Ether of Bisphenol A. Equiv. weight 190 | 100 parts |
| 2) CURING AGENT Sherex Polymers Azamine 240 | Mannich Base | 50-80 parts |
| 3) ACCELERATOR Rohm & Haas DMP-30 | 2,4,6 Trisoimethyl Amino Methyl Phenol | 2-10 parts |
| 4) EPOXY DILUENT Azepoxy 8 | Mono Epoxide Aliphatic Glycidyl Ether consisting of $C_{12}$ & $C_{14}$ Alkyl Groups | 0-20 |

The quantity of Azepoxy 8 is varied to adjust the viscosity of the system. The quantities of Azamine 240 and DMP-30 are varied to adjust reaction rate of the resin system.

To maintain pipe thickness at a minimum, 1/4" urethane foam was used. The cross section of the pipe is as follows:

1) Inside liner = 15 mil urethane film-PT 9200 Deerfield Urethane, Inc.

2) Radially inner glass cloth reinforcement = 7 1/4 ounce woven fiberglass finishing cloth, BGF Industries.

3) Foam = 1/4" Urethane open cell foam designated 1236 foam.

4) Radially outer glass cloth reinforcement = 9.6 ounce woven fiberglass supplied by BGF Industries.

The 7 1/4 ounce and 9.6 ounce fiberglass cloth is conventional and readily available. The foam is also a standard commercial product readily available. The 9200 urethane film is available from Deerfield Urethane Inc.

As seen in the drawing, a "pig" 30 is adapted to be drawn through the liner 10 by a cable 32, normally installed within the liner 10 prior to insertion thereof into the pipe 14. Alternatively, the "pig" 30 may be blown through the liner 10 by a pressure differential across the "pig" 30. In either case, radially outward compression of the foam layer 18 forces the resin therein into and through the inner and outer fibre glass cloth layers 16 and 20 into contact with the tube 12 and pipe 14 respectively.

The end of the liner 10 into which the "pig" 30 is introduced is closed by a plug 40 having an air valve 42 therein for the admittance of pressurized air. In this manner radial expansion of the liner 10 and compression of the resin laden foam behind the "pig" 30 is augmented by air pressure. Moreover, the lining 10 is maintained in the radially expanded condition by air pressure after passage of the "pig" 30.

The "pig" 30 comprises a central core 50 having radially extending bristles 52 thereon. The central core 50 has rings 60 and 62 at opposite ends thereof for the acceptance of the forwardly extending cable 32 and a rearwardly extending cable 66.

In order to facilitate movement of the "pig" 30 through the pipe liner 10, a rubber diaphragm 70 is mounted on the core 50 at the rear end thereof to insure the creation and maintenance of an air pressure differential across the "pig" 30. The outer diameter of the rubber diaphragm 70 is smaller than the inside diameter of the elastomeric tube 12 of the liner 10, whereby the bristles 52 of the pig 30 function as a bearing for the pig 30 without drag being induced by the diaphragm 70 due to sliding engagement of the tube 12.

Assembly of the liner 10 in the pipe 14 is initiated by saturating the foam layer 18 of the liner 10 with resin as by introducing the liner 10 into a resin bath. A leading end 80 of the pipe liner 10 is closed by any suitable means so that the interior thereof is air and water tight. Preferably, a small amount of air is introduced into the pipe liner 10 sufficient to float the liner 10 on the surface of water normally found or introduced into the pipe to be repaired. It is to be noted that under normal circumstances, such pipes often have entrapped pools of ground water. In the absence of ground water the normal slope of the pipe 14 can be utilized by capping the lower end thereof and inserting the liner 10 from the relatively higher end into the water introduced into the pipe for floatation purposes.

Water entrapped interiorly of the pipe 14 but exteriorly of the pipe liner 10 must be removed in order to effect a proper bond between the liner 10 and the pipe 14. This is accomplished by permitting entrapped water to flow outwardly of the pipe 14 to the extent such flow can be induced by gravity.

It is a feature of the instant invention that any water remaining in the pipe 14 is removed by practicing th method of the instant invention. Specifically, such water is forced from the pipe 14 by advancement of the "pig" 30 incident to installation of the pipe liner 10.

After the pipe liner 10 is fully introduced into the pipe 14, a controlled pressure release or bleed clamp 82 is attached to the liner 10 to vent the interior of the liner 10 ahead of the "pig" 30 to slightly above atmospheric pressure and guide the cable 32. The "pig" 30 is introduced into an opposite end 84 of the liner 10 followed by the end plug 40. Thereafter, air under pressure is introduced through the air valve 42 in the plug 40 behind the "pig" 30 forcing the "pig" 30 to move to the left, as seen in the drawing, under the influence of an air pressure differential across the "pig" 30 due to the vented cap 82. Movement of the "pig" 30 can be augmented by the cable 32 or restrained by the cable 66 as required.

As the "pig" 30 moves through the pipe 14 and liner 10, the bristles 52 thereof initiates a gradually increasing radially outward pressure on the liner 10 effecting compression of the resin impregnated foam layer 18 thereof forcing the resin to flow radially inwardly and outwardly into intimate encapsulating relationship to the radially inner and outer fiberglass cloth layers 16 and 20 as well as through said radially inner and outer fiberglass layers 16 and 20 into intimate contact with the radially outer surface of the tube 12 and the radially inner wall 13 of the pipe 14, respectively. It is to be noted that the bristles 52 of the "pig" 30 tend to radially bias the liner 10 to the radially compressed condition which action and condition is augmented and maintained by the relatively high air pressure, for example 5 psi, behind the "pig" 30. It is also to be noted that both air and water disposed between the liner 10 and the inner wall 13 of the pipe 14 are moved axially ahead of the "pig" 30 but exteriorly of the liner 10. In this manner, the resin carried by the foam is in effect "squeegeed" to remove admixed water and air resulting in a liner free of voids and bonded to the pipe 14 upon polymerization of the resin. To this end, it is important that the air pressure ahead of the "pig" 30 sufficient only to partially inflate the liner 10 as opposed to fully inflate the liner 10 with resultant compression of the foam 18 and possible entrapment of air and water.

While the preferred embodiment of the invention has been disclosed, it should be appreciated that the invention is susceptible of modification without departing from the scope of the following claims.

## Claims

1. A liner for a pipe comprising;
an imperforate inner tube,
a first fiber matrix surrounding said tube,
a layer of resin impregnated transfer medium surrounding said first fibre matrix, and
a second fibre matrix surrounding said layer of transfer medium,
radial compression of said layer of transfer medium effecting flow of said resin through said first and second fibre matrices into bonding contact with said tube and pipe, respectively.

2. A liner of claim 1 wherein said transfer medium comprises open cell foam.

3. A method of lining a pipe comprising the steps of;
providing an imperforate flexible tube,
surrounding said tube with a first layer,
impregnating said first layer with a plastic resin,
inserting said tube and impregnated first layer into a pipe to be lined, and
biasing said flexible tube radially outwardly to compress said first layer to force the resin therein outwardly thereof into contact with said tube.

4. The method of claim 3 wherein said biasing step comprises introducing air under pressure into said tube.

5. The method of claim 3 including the step of surrounding said tube with a fibre matrix radially inwardly of said first layer.

6. The method of claim 3 including the step of surrounding said first layer with a fibre matrix.

7. The method of claim 3 including the step of partially filling said pipe with water,
partially inflating said tube, and
floating said tube through said pipe.

8. The method of claim 3 including the step of moving a "pig" through said tube to effect radial compression of said first layer.

9. The method of claim 8 including the step of introducing air under pressure behind said "pig".

10 A "pig" for effecting radial expansion of a pipe liner comprising
a central core, and

EP 0 365 156 A2

a plurality of closely circumferentially spaced bristles extending radially to a diameter greater than the inside diameter of said pipe liner.

11. A "pig" in accordance with claim 10 including a radially extending diaphragm for maintaining a pressure differential across said "pig".

5